# EUROPÄISCHE PATENTSCHRIFT

(11) **EP 0 855 462 B1**
(45) Veröffentlichungstag und Bekanntmachung des Hinweises auf die Patenterteilung: **16.03.2005**
(21) Anmeldenummer: 97121127.1
(22) Anmeldetag: 02.12.1997
(51) Int. Cl.: C09D 5/18, C09D 125/14, C09D 129/04, C09D 135/08, C09D 133/06, D06N 3/04

(54) **Beschichtungsmittel zur Herstellung von wasserdichten, dampfdurchlässigen und flammverzögernden Beschichtungen**
Coating composition for the preparation of water-impermeable, vapour-permeable and flame-retardant coatings
Composition de revêtement pour la préparation de revêtements ignifuges, perméables à la vapeur, étanches à l'eau

(30) Priorität: 22.01.1997 DE 19702076
(43) Veröffentlichungstag der Anmeldung: 29.07.1998
(73) Patentinhaber: Clariant GmbH, 65929 Frankfurt am Main (DE)
(72) Erfinder: Heidel, Peter, Dr., 86399 Bobingen (DE); Schwarz, Gerhard, 63456 Hanau (DE)

(56) Entgegenhaltungen:
- EP-A- 0 263 267
- EP-A- 0 659 850
- WO-A-93/13183
- DATABASE CHEMABS [Online] CHEMICAL ABSTRACTS SERVICE, COLUMBUS, OHIO, US; XU, GUIQIN ET AL: "FSF-1 waterborne intumescent fire-resistant coatings" retrieved from STN Database accession no. 115:161275 CA XP002168731 & TULIAO GONGYE (1990), (6), 17-19 ,

## Beschreibung

Die Erfindung betrifft Beschichtungsmittel zur Herstellung von wasserdichten, dampfdurchlässigen und flammverzögernden Beschichtungen, Verfahren zur Herstellung von damit beschichteten textilen Trägermaterialien, mit dem Beschichtungsmittel beschichtete textile Trägermaterialien sowie deren Verwendung.

Bisher wurden im Bautenschutz gegen das Eindringen von Wasser Spinnvliese aus Polypropylenfaser, Polyesterfaser oder Glasfasem mit Bitumen und ähnlichen Teerprodukten beschichtet, um reißfeste, wasserabstoßende Bahnen zu erhalten. Nachteilig bei diesen Materialien ist, daß bei geringer Wasserdichtigkeit (nach DIN 53886; 200 mm Wassersäule) auch der Durchlaß von Wasserdampf relativ gering ist (nach DIN 53122/1; 100 g/m² Tag).

Aus der EP-A-0,084,630 sind flammhemmende, halogenfreie Formmassen auf Basis von Ethylencopolymerisaten, Bitumen, rotem Phosphor und Al(CH)₃ bekannt, die zur Herstellung von Abdichtungsbahnen eingesetzt werden können.

Aus der EP-A-0,018,691 sind Dachabdeckbahnen aus einem beidseitig PVCbeschichteten Gewebe bekannt. Nachteilig bei dieser Beschichtung ist die sehr niedrige Wasserdampfdurchlässigkeit von 8 g/m² Tag und die Weichmachermigration.

Die DE-A-3,200,824 betrifft ebenfalls mit Weichmacher-haltigem PVC beschichtete textile Trägermaterialien mit den obengenannten Nachteilen. Zur Flammhemmung wurden Gewebe aus flammhemmend modifizierter Polyesterfaser eingesetzt.

In der DE-A-2,124,036 wird eine flammfeste Zubereitung aus einem Ethylen/Vinylchlorid/Acrylamid-Copolymerisat und einem Ammoniumpolyphosphat beschrieben, die als Bindemittel zur Imprägnierung von Faservliesen verwendet werden kann.

Die DE-A-2,452,369 beschreibt flammhemmende Polymerlatices auf der Basis von Vinylchlorid/α-Olefin/Bis-hydrocarbyl-vinyl-phosphonat, die zur Beschichtung unter anderem von Faservliesen eingesetzt werden können. Die beschichteten Faservliese dürften nur eine geringe Wasserdampfdurchlässigkeit aufweisen.

Die DE-A-3,017,019 beschreibt ein folienartiges Abdeckmaterial auf der Basis einer Glasfasermatte, welche auf mindestens einer Seite mit einer Schicht eines mechanisch aufgeschäumten und dann geschmolzenen und zusammengedrückten Vinylpolymeren (vorzugsweise Polyvinylchlorid) bedeckt ist.

In der EP-A-0,176,849 wird erwähnt, daß zur Verbesserung der flammhemmenden Wirkung anorganische Feststoffteilchen in die Trägerbahnen für Dachbahnen eingearbeitet werden können. Die Wirkung dieser Teilchen beruht auf der Bildung einer festen, gerüstartigen verkohlenden Schicht. Die Beschichtung ist darauf ausgerichtet, das Einbrennen von Löchern in die Dachbahn durch fliegende Glut zu verhindern.

Die EP-A-0,525,639 beschreibt ein flammverzögerndes Beschichtungsmittel auf der Basis eines Vinylchlorid-Copolymeren. Es ist jedoch bekannt, das Polymere auf Basis von Vinylchlorid im Brandfalle ökologisch bedenkliche Verbindung - beispielsweise Dioxine- freisetzen, so daß hier ein Ersatzbedarf notwendig erscheint. Weiterhin beschreibt EP-A-0,525,639 ein flammverzögerndes Beschichtungsmittel auf Basis einer Vinylacetat/Ethylen-Dispersion. Derartige Dispersionen haben jedoch einen hydrophilen Charakter und damit einhergehend das Bestreben Wassser aufzusaugen. Dieser "Dochteffekt" führt zu einer geringen Wasserdichtigkeit und einer früheren Undichtigkeit während einer Beregnung.

Es bestand daher die Aufgabe ein Beschichtungsmittel zur Verfügung zu stellen, das sich zur Herstellung von flammhemmenden Beschichtungen, insbesondere von textilen Trägermaterialien, mit hoher Wasserdichtigkeit bei hoher Wasserdampfdurchlässigkeit eignet und im Brandfalle keine ökologisch bedenklichen Verbindungen im vorstehenden Sinne freisetzen.

Gegenstand der Erfindung ist eine im wesentlichen halogenfreie Beschichtungsmasse zur Herstellung von wasserdichten, wasserdampfdurchlässigen und flammverzögernden Beschichtung enthaltend
A) eine wäßrige, nicht-selbstvernetzende Dispersion mit einem Feststoffgehalt von 30 bis 70 Gew.-% eines Copolymeren wobei das Copolymer entweder
   A¹) 20 bis 90 Gew.-%, bezogen auf das Gesamtgewicht des Copolymeren, an bivalenten Struktureinheiten der Formel (I) 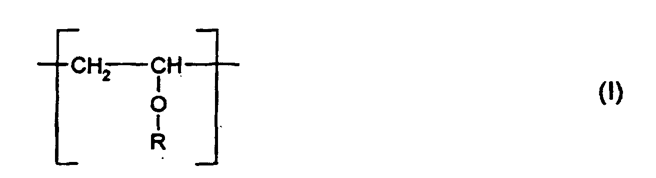 worin
      - R: Wasserstoff, einen linearen C₁-C₁₀ Alkyllrest, einen verzweigten C₃-C₁₀ Alkylrest oder einen Rest der Formel 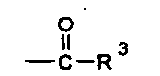 worin R³ für einen linearen C₁-C₁₀ Alkyllrest oder einen verzweigten C₃-C₁₀ Alkylrest steht,
      und
   A²) 80 bis 10 Gew.-%, bezogen auf das Gesamtgewicht des Copolymeren, an bivalenten Struktureinheiten der Formel (II) 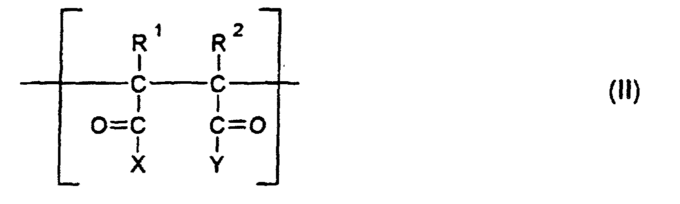 worin
      - R¹ und R²: unabhängig voneinander Wasserstoff oder C₁C₄-Alkyl und
      - X und Y: unabhängig voneinander -OH oder -O-C₁-C₂₀-Alkyl bedeuten
      oder
   A³) 20 bis 90 Gew.-%, bezogen auf das Gesamtgewicht des Copolymeren, an bivalenten Struktureinheiten der Formel (III) 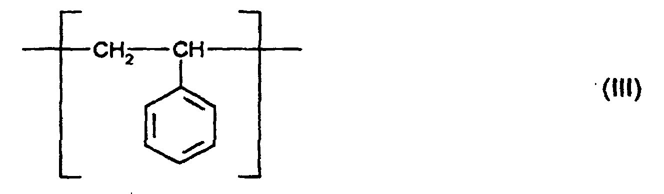 und
   A⁴) 80 bis 10 Gew.-%, bezogen auf das Gesamtgewicht des Copolymeren, an bivalenten Struktureinheiten der Formel (IV) 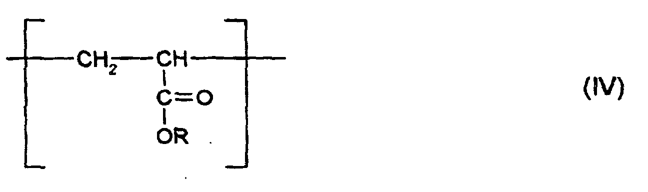 worin
      - R: Wasserstoff oder C₁-C₁₀-Alkyl bedeutet,
B) 5 bis 70 Gew.-%, bezogen auf den Feststoffgehalt der Copolymerdispersion, eines Flammschutzhilfsmittels,
C) 0,1 bis 15 Gew.-%, bezogen auf den Feststoffgehalt der Copolymerdispersion, eines Schaummittels,
D) 0,5 bis 60 Gew.-%, bezogen auf den Feststoffgehalt der Copolymerdispersion, eines Weichmachers,
E) 0 bis 10 Gew.-%, bezogen auf den Feststoffgehalt der Copolymerdispersion, eines Verdickungsmittels
F) 0 bis 10 Gew.-%, bezogen auf den Feststoffgehalt der Copolymerdispersion, eines Farbpigmentes.

Bevorzugte Vinyl-Copolymere sind Vinylester wie Vinylacetat, Vinylether oder Vinylalkohole.

Bevorzugte Comonomere für die Vinyl-Copolymeren, die durch die Formel (II) beschrieben werden, sind ethylenisch ungesättigte, cyclische Carbonsäureanhydride, ethylenisch ungesättigte Dicarbonsäuren oder ethylenisch ungesättigte Dicarbonsäureester von Alkoholen mit 1 bis 20 Kohlenstoffatomen.

Bevorzugte ethylenisch ungesättigte, cyclische Carbonsäureanhydride sind substituierte oder unsubstituierte Maleinsäureanhydride.

Bevorzugte ethylenisch ungesättigte Dicarbonsäuren sind Maleinsäure oder deren Salze.

Bevorzugte ethylenisch ungesättigte Dicarbonsäureester von Alkoholen mit 1 bis 20 Kohlenstoffatomen sind beispielsweise Dimethylmaleinat, Diethylmaleinat, Dipropylmaleinat, Di-isopropylmaleinat, Di-n-butylmaleinat, Di-iso-butylmaleinat, Dipentylmaleinat, Dihexylmaleinat oder Mischungen derselben untereinander oder mit den entsprechenden Mono-alkylmaleinaten.

Bevorzugte Comonomere für die Styrol-Copolymeren, die durch die Formeln (III) und (IV) beschrieben werden, sind ethylenisch ungesättigte Acrylsäure/Methacrylsäure oder ethylenisch ungesättigte Acrylsäure/Methacrylsäureester von Alkoholen mit 1 bis 10 Kohlenstoffatomen. Beispiele hierfür sind Acrylsäuremethylester, Acrylsäureethylester, Acrylsäurepropylester, Acrylsäure-iso-propylester, verzweigte und unverzweigte Acrylsäurebutylester, Acrylsäurepentylester, Acrylsäurehexylester, Acrylsäure-2-ethyl-hexylester, sowie die entsprechenden Methacrylsäureverbindungen.

Die vorstehend genannten Dispersionen beinhalten in Form der Struktureinheiten (II) oder (IV) einen Bestandteil, die den hydrophoben Charakter des Polymeren und damit den der gesammten Beschichtungsmasse erhöht, wodurch Eigenschaften wie Wasserdichtigkeit, Wasserdampfdurchlässigkeit und Beregnungsbeständigkeit erheblich verbessert werden.

Die Herstellung der wäßrigen Copolymerisatdispersionen erfolgt vorzugsweise nach dem Emulsionspolymerisationsverfahren und wird in den üblichen Polymerisationsgefäßen durchgeführt. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

Die Emulsionspolymerisation wird in einem Temperaturbereich von 0 bis 100 °C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0,01 bis 3,0 Gew.-%, bezogen auf das Gesamtgewicht der Monomeren, eingesetzt werden. Beispiele hierfür sind Ammonium- und Kaliumpersulfat, -peroxodisulfat; Wasserstoffperoxid; Alkylhydroperoxide, wie tert.-Butylhydroperoxid; Kalium-, Natrium- und Ammoniumperoxidphosphat; Azoverbindungen, wie Azobisisobutyronitril oder Azobiscyanovaleriansäure. Gegebenenfalls können die genannten radikalischen Initiatoren auch in bekannter Weise mit 0,01 bis 0,5 Gew.-%, bezogen auf das Gesamtgewicht der Monomeren, Reduktionsmittel kombiniert werden. Geeignet sind zum Beispiel Alkaliformaldehydsulfoxylate. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und Schutzkolloide eingesetzt werden. Vorzugsweise werden 1 bis 6 Gew.-%, bezogen auf das Gesamtgewicht der Monomren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobersteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide, vorzugsweise in Mengen bis zu 15 Gew.-%, bezogen auf das Gesamtgewicht der Monomeren, eingesetzt werden. Beispiele hierfür sind VinylalkoholNinylacetat-Copolymere mit einem Gehalt von 80 bis 100 Mol-% Vinylalkoholeinheiten, Polyvinylpyrrolidone mit einem Molekulargewicht von 5000 bis 400000, Hydroxyethylcellulosen mit einem Substitutionsgradbereich von 1,5 bis 3.

Der für die Polymerisation gewünschte pH-Bereich, der im allgemeinen zwischen 2,5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Geeignete Flammschutzhilfsmittel B) sind beispielsweise Antimontrioxid Sb₂O₃, Antimonpentoxid Sb₂O₅, Magnesiumoxidhydrat Mg(OH)ₓ, Aluminiumoxidhydrat Al₂O₃•3H₂O, Zinkborat Zn(BO₂)₂ 2H₂O bzw. 2ZnO (B₂O₃)₃ (H₂O)_{3,5}, Ammonium-ortho- bzw. -polyphosphat NH₄H₂PO₄ bzw. (NH₄PO₃)_{n,} wie ®Hostaflam AP, und Organophosphorverbindungen wie ®Hostaflam OP, sowie intumeszens Flammschutzhilfsmittel wie intumeszens Graphit wie beispielsweise ®Sigraflex-Typen (Fa. SGL Carbon) oder roter Phosphor beispielsweise ®Hostaflam RP (®Hostaflam ist ein Warenzeichen der Hoechst AG). Weitere Beispiele für geeignete, halogenfreie Flamschutzhilfsmittel sind reaktive Schwefel/Stickstoff-Verbindungen sowie die in dem Artikel "Flame Retardants Buyers Guide" (American Dyestuff Reporter, Januar 1993) aufgelisteten Flammschutzmittel. Vorzugsweise wird das Flammschutzhilfsmittel in einer Menge von 5 - 70 Gew.-% besonders bevorzugt 20 - 50 Gew.-%, bezogen auf den Feststoffanteil der Copolymerdispersion, eingesetzt.

Das Beschichtungsmittel enthält darüber hinaus als Bestandteil C) ein Schaummittel in einer Menge von 0,1 - 15 Gew.-%, vorzugsweise 2 bis 10 Gew.-%, bezogen auf den Feststoffgehalt der Copolymerdispersion. Geeignete grenzflächenaktive Mittel sind die Salze der Olefinsulfonate (®Hostapur OS/OSB), Aminoxide wie Alkyldimethylethylaminoxid (®Genaminox CS/CST/CA/MY), Salze höherer Alkylsulfate (®Hostapur SAS), Alkylethersulfate (®Genapol LRO) Alkylbenzolsulfonate, Dialkylsulfosuccinate, Polyoxyethylenalkylphenylether, Polyoxyethylenacylester, Fettsäuresalze, Fettsäurealkanolamide (®Genagen CA 050), Betaine (®Genagen CAB), Nonylphenolethoxylate (®Arkopal N), ethoxylierte Fettalkohole (®Genapol O/OA/OAA/OX/OXD/T/X/UD-Typen), Sulfosuccinate (®Genapol SBE), Alkylethercarbonsäuren (®Hostapon LEC), Acylglutamate (®Hostapon KCG), Isethionate (®Hostapon SCI/SCID), Eiweißfettsäurekondensate (®Hostapon SCHC), Methyltauride (®Hostapon CT/T), Sarkoside (®Medialan-Typen). Besonders bevorzugt werden Alkylbenzolsulfonate, Alkylsulfate und Fettsäuresalze von Fettsäuregemischen von Fettsäuren unterschiedlicher Kettenlänge, insbesonders die Ammoniumsalze der Fettsäuren.(®Hostapur, ®Hostapon, ®Genaminox, ®Genapol, ®Genagen, ®Arkopal und ®Mediatan sind Warenzeichen der Hoechst AG)

Weiter enthält das Beschichtungsmittel in Form des Bestandteiles D) einen Weichmacher. Hierbei handelt es sich beispielsweise um Paraffinöle in Mengen bis 60 Gew.-%, Silikone in Mengen bis 3 Gew.-%, jeweils bezogen auf den Feststoffgehalt der Copolymerdispersion. Beispiele für geeignete Silikone sind Polyalkylsiloxane wie Poly(dimetylsiloxan) oder Poly(methylsiloxan). Geeignete Siloxane sind beispielsweise Aminopropyl oder Cyclohexylamine modifizierte. Darüber hinaus sind auch Aminopropylsilikone geeignet. Beispiele hierfür sind Solosoft WMA oder WMB. Geeignete wasserstoffhaltige Polyalkylsiloxane sind unter dem Namen®Finish WS 60 E (Fa. Wacker) im Handel erhältlich. Weitere Beispiele sind wasserdispergierbare Wachse auf Polyolefin-Basis, insbesondere auf Basis Polyethylen wie ®Arkophob NPK (Fa. Hoechst AG).

Zur Verbesserung der Schaumstabilität bei Auftragung und Trocknung des Beschichtungsmittels in Schaumform können auch in Form des Bestandteiles E) Verdickungsmittel, bevorzugt organische Verdickungsmittel in einer Menge von bis zu 10 Gew.-% insbesondere 0,1 - 10 Gew.-% (bezogen auf den Feststoffgehalt der Copolymerdispersion) zugesetzt werden. Vorzugsweise werden Polyvinylalkohole, wasserlösliche Cellulosederivate wie Methylcellulose, Methylhydroxyethylcellulose, Hydroxyethylcellulose, Hydropropylcellulose, Polyurethane sowie Polyvinylpyrrolidone und Ammoniumsalze der Polyacrylsäuren eingesetzt. Besonders bevorzugt werden die Ammoniumsalze der Polyacrylsäure eingesetzt.

Des weiteren kann die erfindungsgemäße Beschichtungsmasse noch ein Farbpigment (Bestandteil F) enthalten. Vorteilhafterweise ist es wenn dieses zusätzlich ein Flammschutzmittel ist. Ein Beispiel hierfür ist roter Phosphor, der vorzugsweise in Mengen von 5 bis 70 Gew.-%, bezogen auf den Feststoffgehalt der Copolymerdispersion, zur Verbesserung des Flammschutzes und als Farbpigment zugesetzt werden kann.

Vorzugsweise wird die Viskosität des Beschichtungsmittels durch Zugabe von Verdickungsmittel und/oderr Wasser auf 500 bis 3000 mPas (Brookfield, 20 Upm, Raumtemperatur) eingestellt.

Unter dem Begriff im wesentlichen halogenfrei wird verstanden, daß die erfindungsgemäße Beschichtungsmasse maximal 1 Gew.-% Halogen, vorzugsweise maximal 0,5 Gew.-% Halogen (bezogen auf den Feststoffgehalt der Copolymerdispersion) enthält.

Zur Herstellung der Beschichtungsmittel-Zusammensetzung wird vorzugsweise die Copolymerdispersion A) vorgelegt und das Flammschutzhilfsmittel B) zugegeben. Nach Zugabe von Wasser wird der Weichmacher D), gegebenenfalls das Farbpigment F), sowie das Schaummittel C) zugegeben. Zuletzt wird zur Einstellung der gewünschten Viskosität das Verdickungsmittel E) zugemischt.

Das erfindungsgemäße Schichtungsmittel eignet sich zur Beschichtung von textilen Flächengebilden. Derartig beschichtete textile Flächengebilde sind ebenfalls Gegenstand der vorliegenden Erfindung.

Der Begriff "textiles Flächengebilde" ist im Rahmen dieser Beschreibung in seiner breitesten Bedeutung zu verstehen. Dabei kann es sich um alle Gebilde aus Fasern, insbesondere aus synthetisierten Polymeren, handeln, die nach einer flächenbildenden Technik hergestellt worden sind. Beispiele für solche Gebilde sind Gewebe, Gestricke und vorzugsweise Gelege, Gewirke und Vliese. Als Fasern werden sowohl Fasern endlicher Länge, sogenannte Stapelfasern, als auch endlose Fasern, sogenannte Filamente, verstanden.

. Von den Vliesen aus Fasern aus synthetischen Polymeren sind Spinnvliese, sogenannte Spunbonds, die durch eine Wirrablage frisch schmelzgesponnener Filamente erzeugt werden, bevorzugt.
Sie bestehen aus Endlos-Synthesefasern aus schmelzspinnbaren Polymermatierialien. Geeignete Polymermaterialien sind beispielsweise Polyamide, wie z.B. Polyhexamethylen-diadipamid, Poly-caprolactam, aromatische oder teilaromatische Polyamide ("Aramide"), teilaromatische oder vollaromatische Polyester, Polyphenylensulfid (PPS), Polymere mit Ether- und Keto-gruppen, wie z.B. Polyetherketone (PEK) und Polyetheretherketon (PEEK), oder Polybenzimidazole.

Bevorzugt bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei das Ethylenglycol besonders geeignet ist. Besonders vorteilhaft sind erfindungsgemäße Verbundstoffe, deren Vliese aus einem Polyestermaterial bestehen, das zu mindestens 85 mol% aus Polyethylenterephthalat besteht. Die restlichen 15 mol% bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z.B. von Propandiol oder Butandio, von Di- oder Triethylenglycol oder, sofern in geringer Menge vorhanden, von Polyglycol mit einem Molgewicht von ca. 500 bis 2000.

Darüber hinaus können auch flammhemmend modifizierte Polyester verwendet werden. Derartige Substanzen sind in DE-A-3,940,713 beschrieben und im Handel unter der Bezeichnung ®TREVIRA CS oder ®TREVIRA FR erhältlich.

Besonders bevorzugt sind Polyester, die mindestens 95 mol% Polyethylenterephthalat enthalten, insbesondere solche aus unmodifiziertem Polyethylenterephthalat.

Die in den Vliesen enthaltenen Polyester haben üblicherweise ein Molekulargewicht entsprechend einer intrinsischen Viskosität (IV) von 0,5 bis 1,4 (dl/g), gemessen an Lösungen in Dichloressigsäure bei 25°C.

Die textilen Flächengebilde aus Fasern aus synthetischen Polymeren zur Herstellung der erfindungsgemäßen Trägereinlage weisen übliche Flächengewichte von 20 bis 2000 g/m², vorzugsweise 50 bis 400 g/m², insbesondere 70 bis 250 g/m², auf.

Die Vliese werden nach ihrer Herstellung mechanisch beispielsweise durch Vernadeln und/oder chemisch beispielsweise durch Schmelzbinder, die bevorzugt in Faserform eingebracht werden, verfestigt.

In einer weiteren Ausführungsform der Erfindung kann das textile Flächengebilde aus Fasern aus synthetischen Polymeren auch ein schmelzbinderverfestigter Vliesstoff sein, welcher Träger- und Bindefasern enthält. Die Träger- und Bindefasern können sich von beliebigen thermoplastischen fadenbildenden Polymeren ableiten entsprechend dem Anforderungsprofil des Anwenders. Der Anteil der beiden Faserntypen zueinander kann in weiten Grenzen gewählt werden, wobei darauf zu achten ist, daß der Anteil der Bindefasern so hoch gewählt wird, daß der Vliesstoff durch Verklebung der Trägerfasem mit den Bindefasem eine für die gewünschte Anwendung ausreichende Festigkeit erhält. Der Anteil des aus der Bindefaser stammenden Bindemittels im Vliesstoff beträgt üblicherweise weniger als 50 Gew.-%, bezogen auf das Gewicht des Vliesstoffes.

Als Schmelzbinder kommen insbesondere modifizierte Polyester mit einem gegenüber dem Vliesstoff-Rohstoff um 10 bis 50°C, vorzugsweise 30 bis 50°C abgesenkten Schmelzpunkt in Betracht. Beispiele für ein derartiges Bindemittel sind Polypropylen, Polybutylen-terephthalat oder durch Einkondensieren längerkettiger Diole und/oder von Isophthalsäure oder aliphatischen Dicarbonsäuren modifiziertes Polyethylen-terephthalat.
Die Schmelzbinder werden vorzugsweise in Faserform in die Vliese eingebracht, insbesondere in einer solchen Weise, daß mindenstens eine - in der Regel die mit dem Flamm- und/oder Brandschutzmaterialien auszurüstende - Oberfläche nahezu vollständig aus Bindefasern besteht, wie dies die EP-A-0530769 beschreibt.
Die Einzelfasertiter der Träger- und der Bindefasem betragen üblicherweise 1 bis 16 dtex, vorzugsweise 2 bis 6 dtex.

In einer weiteren Ausführungsform können die Vliese nach einer mechanischen Verfestigung durch Vernadelung und/oder mittels Fluidstrahlen gegebenenfalls mit Hilfe eines chemischen Binders beispielsweise auf Basis eines Polyacrylats endverfestigt werden.

In einer bevorzugten Ausführungsform ist das Spinnvlies ein vernadeltes Polyethylenterephthalat-Spinnvlies, das zur Verfestigung und Glättung der Obertläche bei erhöhter Temperatur kalandriert worden ist. Dieser thermisch verfestigte Vliesstoff bzw. durch Kalandrieren verfestigte Vliesstoff hat eine besonders glatte Oberfläche und ist somit besonders gut anzuwenden.

Besonders bevorzugt sind auch solche Trägereinlagen, die eine Kombination von bevorzugten Merkmalen aufweisen.

Die die Vliesstoffe aufbauenden Filamente oder Stapelfasern können einen praktisch runden Querschnitt besitzen oder auch andere Formen aufweisen, wie hantel-, nierenförmige, dreieckige bzw. tri- oder multilobale Querschnitte. Es sind auch Hohlfasern einsetzbar. Ferner läßt sich die Bindefaser auch in Form von Bioder Mehrkomponentenfasern, sowie Heterofilament einsetzen.

Die das Spinnvlies bildenden Filamente können durch übliche Zusätze modifiziert sein, beispielsweise durch Antistatika, wie Ruß.

Besonders vorteilhaft ist es wenn die vorstehend beschriebenen Spinnvliese einen mehrschichtigen Aufbau besitzt. Derartige Spinnvliese haben zusätzlich eine Schicht aus feintitrigen Polyesterfilamenten und /oder feintitrigen Polyesterstapelfasern, wobei deren Einzeltiter 1 bis 3 dtex beträgt. Diese feintitrigen Faser haben vorzugsweise einen runden oder ovalen Querschnitt. Diese Schicht ist u.a. für die Dampfdurchlässigkeit und Regendichtigkeit verantwortlich.

Die erfindungsgemäß eingesetzten Spinnvliese haben eine Weiterreißfestigkeit von 70 - 200 N in Längsrichtung (bestimmt gemäß DIN 53356).

Die Beschichtung des textilen Flächegebildes erfolgt durch Auftragen der Beschichtungsmasse in Form eines Schaumes. Hierzu wird die mittels konventioneller Maßnahmen aufgeschäumte Beschichtungsmasse, die eine Schaumdichte von etwa 50 bis 500 g/l, vorzugsweise 150 bis 300 g/l, aufweist, mit üblichen Beschichtungseinrichtungen beispielsweise einem Streichrakel oder anderen Schaumauftragungsgeräten, auf das textile Flächengebilde aufgetragen. Die Auftragung kann ein- oder beidseitig erfolgen; vorzugsweise erfolgt sie beidseitig. Die Auftragungsmenge pro Seite beträgt von 20 bis 250 g/m², insbesonderes 50 bis 150 g/m². Bei Mengen unterhalb 20 g/m² erhält man zwar guten Dampfdurchlaß bei relativ niedrigen Kosten, aber ungenügenden Flammschutz und schlechte Wasserdichtigkeit. Bei Mengen oberhalb 250 g/m² können beim Trocknen Rißbildungen auftreten.

Nach der Auftragung wird der Schaum bei geringer Luftströmung im Trockenkanal, beispielsweise durch Infraroterhitzung, mit einem Temperaturgradienten von 60 auf 180 °C, vorzugsweise 60 auf 130 °C getrocknet.

Anschließend wird das beschichtete textile Flächengebilde hydrophobiert. Hierzu wird das beschichtete textile Flächengebilde mit Hydrophobierungsmittel, beispielsweise Fluorkohlenwasserstoffe in Mengen bis 3 Gew.-%, bezogen die Beschichtungsmasse, beschichtet. Weitere Beispiele für die Wasserdichtigkeit erhöhende Zusätze (Hydrophobierungsmittel) sind fluorhaltige Poly- oder Oligomere wie Perfluoralkylethanole, Perfluoralkylpropanole, Perfluoralkylacrylate, die gegebenenfalls noch durch Oxethylierung, Veresterung oder Sulfatierung modifiziert sein können. Die vorstehend beschriebenen Perfluoralkylacrylate liegen gegebenenfalls als oligomere bzw. polymere Lösungen oder Dispersionen vor und sind unter dem Handelnamen ®Scotchban (Fa. 3M), ®NUVA FSN, ®NUVA FHN und ®NUVA FPT (Fa. Hoechst AG) im Handel erhältlich. Weitere Beispiele für die Wasserdichtigkeit erhöhende Zusätze (Hydrophobierungs-mittel) sind fluorhaltige Polysiloxane. Das Aufbringen des Hydrophobierungsmittels erfolgt mittel Foulard oder durch Aufsprühen. Anschließend wird bei Temperaturen zwischen 130-210°C vorzugsweise 150-180°C, getrocknet bzw. kondensiert.

Zur Erzeugung einer besonders gleichmäßigen Beschichtung kann das beschichtete textile Flächengebilde nach einer Vortrocknung (1 bis 5 Minuten bei 80 bis 130°) eine Kalandrierung erfahren (Liniendruck ca. 100-300 N/cm) an die sich die Endtrocknung mit dem zuvor beschriebenen Temperaturprofil anschließt.

Zur Verbesserung der flammhemmenden Wirkung wird in einer bevorzugten Ausführungsform der Schaum beidseitig in einer Schichtdicke von 0,3 bis 1,0 mm aufgetragen. Besonders bevorzugt wird der Schaum in unterschiedlicher Schichtdicke auf die beiden Seiten des textilen Flächengebildes aufgetragen. Bei der letztgenannten Ausführungsform wird der Schaum auf der Unterseite in einer dünnen Schicht von maximal 0,4 mm Schichtdicke, vorzugsweise mit einem Luftrakel, so aufgetragen, daß er möglichst tief in die Hohlräume des Vlieses zwischen die Fasern eindringt. Auf der Oberseite dagegen wird der Schaum zur Verbesserung der Wasserdichtigkeit, vorzugsweise mit einem Rollenrakel, insbesonders in einer Schicht von 0,3 bis 1,0 mm Schichtdicke, aufgetragen.

In einer besonders bevorzugten Ausführungsform kann zur Verbesserung der Abriebfestigkeit, der flammhemmenden Wirkung und der Wasserdichtigkeit die Schaumschicht nach der Trocknung komprimiert und dabei teilweise in das Vlies eingepreßt werden. Die Komprimierung kann beispielsweise durch Heißkalandrierung in einem Temperaturbereich von 100 bis 180°C und bei einem Liniendruck von 2 bis 300 daN/cm erfolgen, wobei es vorteilhaft ist, die Heißkalandrierung zwischen 2 glatten Rollen, einer aus Stahl und einer aus einem weicheren Material, beispielsweise Polyamid oder Gummi, durchzuführen. Insbesonders wird nur die Schaumschicht auf der Oberseite des textilen Trägermaterials komprimiert. Gegebenenfalls kann zur Verbesserung der Wasserdichtigkeit und der Abriebfestigkeit eine weitere Beschichtung, vorzugsweise in einer Menge von 5 bis 30 g/m², mit unverschäumter Copolymerdispersion erfolgen.

Mit Hilfe der erfindungsgemäßen Beschichtungsmasse sind beschichtete textile Flächengebilde zugänglich, die eine Wasserdichtigkeit von mehr als 600 mm Wassersäule (bestimmt gemäß DIN-Norm 53886) und einer Flammverzögerung, die der Klassifizierung Brandschutzklasse nach DIN 4102 B, Teil II entspricht.

Zusätzlich zeigen die mit der erfindungsgemäßen Beschichtungsmassen beschichtete textile Flächengebilde eine Wasserdampfdurchlässigkeit von mehr als 1000 g/m² pro Tag (bestimmt gemäß DIN 52615 und DIN 53122) und bleibt bei einem Beregnungstest für mindestens 6 Stunden dicht.

Die mit dem erfindungsgemäßen Beschichtungsmittel beschichteten und hydrophobierten textilen Trägermaterialien eignen sich zur Verwendung im Bautenschutz als Dachbahnen oder Abdichtbahnen, beispielsweise unter Dachziegel oder Fassadenwänden aus Holz. Sie eignen sich auch zur Verwendung als Schutzplanen für Geräte und Materialien und für den Einsatz im Geotextilbereich.
Ein mit Hilfe der vorstehenden Beschichtungsmasse beschichtetes Polyester-Spinnvlies (Vernadelter und thermisch verfestigter Vliesstoff) zeigt folgendes Eigenschaftsprofil

| | | |
|---|---|---|
| Flächengewicht (beschichtetlhydrophobiert) | | 181 g/m² |
| Reißkraft [N/5cm] | längs | 331 N |
| | quer | 194 N |
| Dehnung | längs | 18,9 % |
| | quer | 18,7 % |
| Weiterreißkraft | längs | 77 N |
| | quer | 51 N |
| Nagelausreißkraft | längs | 156 N |
| | quer | 141 N |
| Wasserdampfdurchlässigkeit pro 24 h | | 1674 -1925 [g/m²] |
| s_{d}-Wert | | ca. 0,02 m |
| Wasserdichtigkeit | | 650 mm |
| Beregnungstest | | 6 Stunden dicht |
| Brandtest mit Einstufung | | entspricht DIN 4102 B Teil II (aufliegend, mit 2 cm Abstand und frei) |

## Patentansprüche

1. Beschichtungsmasse zur Herstellung von im wesentlichen halogenfreien, wasserdichten, wasserdampfdurchlässigen und flammverzögernden Beschichtung enthaltend
A) eine wäßrige, nicht-selbstvernetzende Dispersion mit einem Feststoffgehalt von 30 bis 70 Gew.-% eines Copolymeren wobei das Copolymer entweder.
A¹) 20 bis 90 Gew.-%, bezogen auf das Gesamtgewicht des Copolymeren, an bivalenten Struktureinheiten der Formel (I) 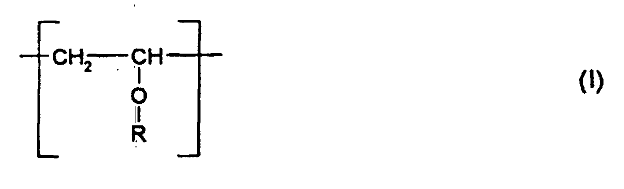 worin
R Wasserstoff, einen linearen C₁-C₁₀ Alkyllrest, einen verzweigten C₃-C₁₀ Alkylrest oder einen Rest der Formel 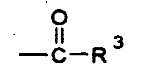 worin R³ für einen linearen C₁-C₁₀ Alkyllrest oder einen verzweigten C₃-C₁₀ Alkylrest steht,
und
A²) 80 bis 10 Gew.-%, bezogen auf das Gesamtgewicht des Copolymeren, an bivalenten Struktureinheiten der Formel (II) 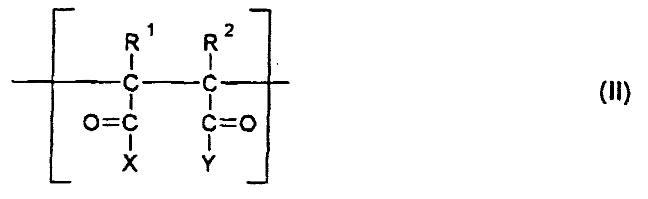 worin
R1 und R2 unabhängig voneinander Wasserstoff oder C₁-C₄-Alkyl und
X und Y unabhängig voneinander -OH oder -O-C₁-C₂₀-Alkyl bedeuten
oder
A³) 20 bis 90 Gew.-%, bezogen auf das Gesamtgewicht des Copolymeren, an bivalenten Struktureinheiten der Formel (III) 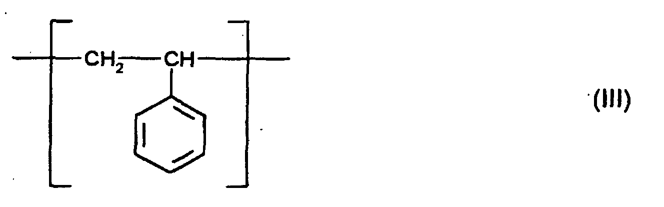 und
A⁴) 80 bis 10 Gew.-%, bezogen auf das Gesamtgewicht des Copolymeren, an bivalenten Struktureinheiten der Formel (IV) 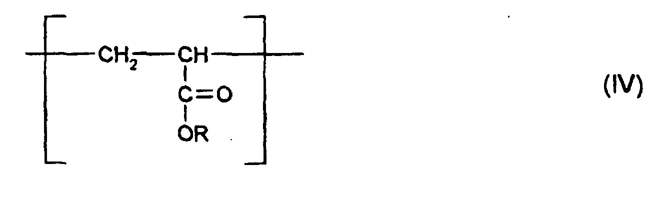 worin
R Wasserstoff oder C₁-C₁₀-Alkyl bedeutet,
B) 5 bis 70 Gew.-%, bezogen auf den Feststoffgehalt der Copolymerdispersion, eines Flammschutzhilfsmittels,
C) 0,1 bis 15 Gew.-%, bezogen auf den Feststoffgehalt der Copolymerdispersion, eines Schaummittels,
D) 0,5 bis 60 Gew.-%, bezogen auf den Feststoffgehalt der Copolymerdispersion, eines Weichmachers,
E) 0 bis 10 Gew.-%, bezogen auf den Feststoffgehalt der Copolymerdispersion, eines Verdickungsmittels
F) 0 bis 10 Gew.-%, bezogen auf den Feststoffgehalt der Copolymerdispersion, eines Farbpigmentes.

2. Beschichtungsmasse gemäß Anspruch 1, **dadurch gekennzeichnet, daß** das Flammschutzhilfsmittel B) Antimontrioxid ,Antimonpentoxid, Aluminiumoxidhydrat, Zinkborat, Ammonium-ortho- bzw. -polyphosphat, Organophosphorverbindungen, intumeszens Flammschutzhilfsmittel oder roter Phosphor ist.

3. Beschichtungsmasse gemäß Anspruch 1, **dadurch gekennzeichnet, daß** das Schaummittel C) ein Salz der Olefinsulfonate, Aminoxide, Salze höherer Alkylsulfate, Alkylethersulfate, Alkylbenzolsulfonate, Dialkylsulfosuccinate, Polyoxyethylenalkylphenylether, Polyoxyethylenacylester, Fettsäuresalze, Fettsäurealkanolamide, Betaine, Nonylphenolethoxylate, ethoxylierte Fettalkohole, Sulfosuccinate, Alkylethercarbonsäuren, Acylglutamate, Isethionate, Eiweißfettsäurekondensate, Methyltauride oder Sarkoside ist.

4. Beschichtungsmasse gemäß Anspruch 1, **dadurch gekennzeichnet, daß** der Bestandteil D) Paraffinöl in Mengen bis 60 Gew.-% und/oder Silikon in Mengen bis 3 Gew.-%, jeweils bezogen auf den Feststoffgehalt der Copolymerdispersion, ist.

5. Beschichtungsmasse gemäß Anspruch 1, **dadurch gekennzeichnet, daß** das Verdickungsmittel ein organisches Verdickungsmittel ist.

6. Beschichtungsmasse gemäß Anspruch 5, **dadurch gekennzeichnet, daß** das organische Verdickungsmittel Polyvinylalkohol, wasserlösliches Cellulosederivat, Polyurethan, Polyvinylpyrrolidon oder ein Ammoniumsalz der Polyacrylsäure ist.

7. Verwendung der Beschichtungsmasse gemäß Anspruch 1 zur Beschichtung von textilen Flächengebilden.

8. Textiles Flächengebilde das zumindest eine einseitige Beschichtung aus der Beschichtungsmasse gemäß Abspruch 1 und eine Hydrophobierung enthält.

9. Verwendung des textilen Flächengebildes gemäß Anspruch 8 als Dachbahn, insbesondere Dachunterspannbahn, Abdichtbahnen, Schutzplane oder als Geotextil.

## Claims

1. A coating composition for producing essentially halogen-free, watertight, water vapor pervious and flame-retardant coating, comprising
A) an aqueous non-self-crosslinking dispersion having a solids content of 30% to 70% by weight of a copolymer, the copolymer either
A¹) 20% to 90% by weight, based on the total weight of the copolymer, of bivalent structural units of the formula (I) 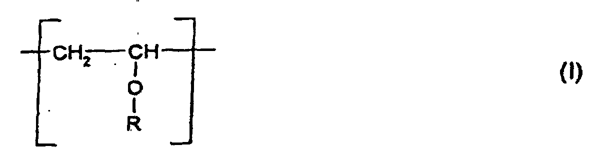 where
R is hydrogen, a linear C₁-C₁₀alkyl radical, a branched C₃-C₁₀alkyl radical or a radical of the formula 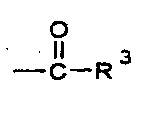 where R³ is a linear C₁-C₁₀alkyl radical or a branched C₃-C₁₀alkyl radical,
and
A²) 80% to 10% by weight, based on the total weight of the copolymer, of bivalent structural units of the formula (II) 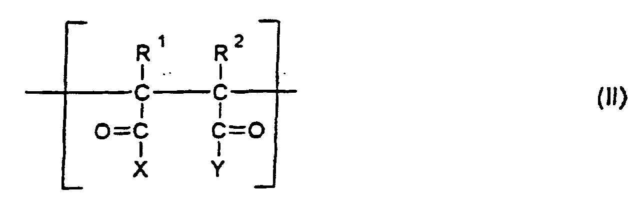 where
R¹ and R² are independently hydrogen or C₁-C₄-alkyl and
X and Y are independently -OH or -O-C₁-C₂₀-alkyl
or
A³) 20% to 90% by weight, based on the total weight of the copolymer, of bivalent structural units of the formula (III) 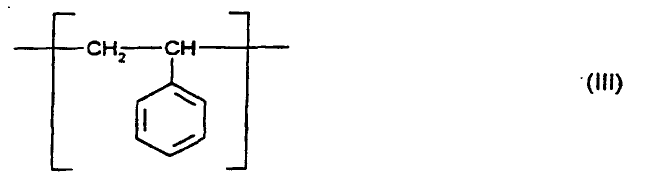 and
A⁴) 80% to 10% by weight, based on the total weight of the copolymer, of bivalent structural units of the formula (IV) 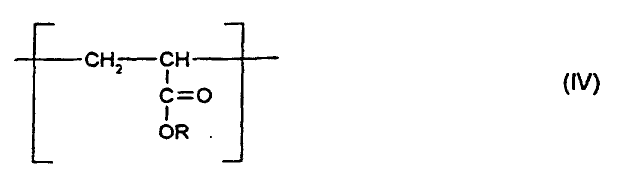 where
R is hydrogen or C₁-C₁₀alkyl,
B) 5% to 70% by weight, based on the solids content of the copolymer dispersion, of a flame retardant,
C) 0.1% to 15% by weight, based on the solids content of the copolymer dispersion, of a foaming agent,
D) 0.5% to 60% by weight, based on the solids content of the copolymer dispersion, of a plasticizer,
E) 0% to 10% by weight, based on the solids content of the copolymer dispersion, of a thickener,
F) 0% to 10% by weight, based on the solids content of the copolymer dispersion, of a color pigment.

2. A coating composition according to claim 1, **characterized in that** the flame retardant B) is antimony trioxide, antimony pentoxide, aluminum oxide hydrate, zinc borate, ammonium orthophosphate, ammonium polyphosphate, organophosphorus compounds, intumescent flame retardants or red phosphorus.

3. A coating composition according to claim 1, **characterized in that** the foaming agent C) is a salt of olefinsulfonates, amine oxides, salts of higher alkyl sulfates, alkyl ether sulfates, alkylbenzenesulfonates, dialkyl sulfosuccinates, polyoxyethylene alkylphenyl ethers, polyoxyethylene acyl esters, fatty acid salts, fatty acid alkanolamides, betaines, nonylphenol ethoxylates, ethoxylated fatty alcohols, sulfosuccinates, alkyl ether carboxylic acids, acylglutamates, isethionates, protein fatty acid condensates, methyltaurides or sarcosides.

4. A coating composition according to claim 1, **characterized in that** the constituent D) is paraffin oil in amounts up to 60% by weight and/or silicone in amounts up to 3% by weight, each percentage being based on the solids content of the copolymer dispersion.

5. A coating composition according to claim 1, **characterized in that** the thickener is an organic thickener.

6. A coating composition according to claim 5, **characterized in that** the organic thickener is polyvinyl alcohol, water-soluble cellulose derivative, polyurethane, polyvinylpyrrolidone or an ammonium salt of polyacrylic acid.

7. The use of the coating composition according to claim 1 for coating textile sheetlike structures.

8. A textile sheetlike structure comprising at least a one-sided coating composed of the coating composition according to claim 1 and a hydrophobicization.

9. The use of the textile sheetlike structure according to claim 8 as roofing membrane, especially roofing underlayment, sealing membranes, protective membrane or as geotextile.

## Revendications

1. Masse de revêtement pour préparer un revêtement pour l'essentiel non halogéné, étanche à l'eau, perméable à la vapeur d'eau et retardateur de flamme, contenant
A) une dispersion aqueuse non autoréticulable ayant une teneur en extrait sec de 30 à 70 % en poids d'un copolymère, le copolymère comprenant
A¹) 20 à 90 % en poids, par rapport au poids total du copolymère, de motifs structuraux bivalents de formule (I) 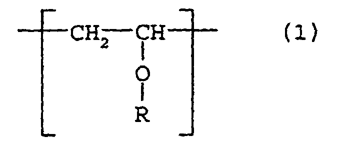 dans laquelle
R est un atome d'hydrogène, un groupe alkyle en C₁-C₁₀ à chaîne droite, un groupe alkyle en C₃-C₁₀ à chaîne ramifiée ou un radical de formule 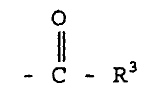 dans laquelle R³ est un groupe alkyle en C₁-C₁₀ à chaîne droite ou un groupe alkyle en C₃-C₁₀ à chaîne ramifiée,
et
A²) 80 à 10 % en poids, par rapport au poids total du copolymère, de motifs structuraux bivalents de formule (II) 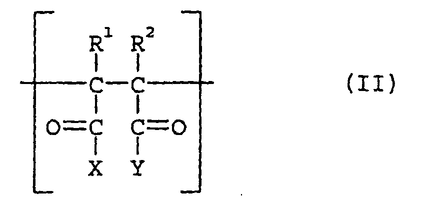 dans laquelle
R¹ et R² représentent chacun indépendamment de l'autre un atome d'hydrogène ou un groupe alkyle en C₁-C₄, et
X et Y représentent chacun indépendamment de l'autre -OH ou -O-(alkyle en C₁-C₂₀),
ou bien
A³) 20 à 90 % en poids, par rapport au poids total du copolymère, de motifs structuraux bivalents de formule (III) 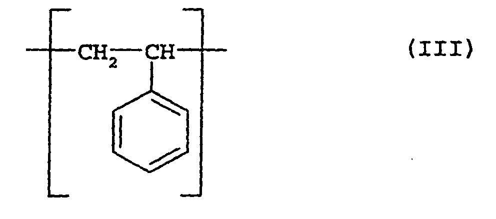 et
A⁴) 80 à 10 % en poids, par rapport du poids total du copolymère, de motifs structuraux bivalents de formule (IV) 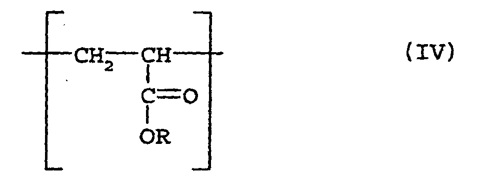 dans laquelle
R est un atome d'hydrogène ou un groupe alkyle en C₁-C₁₀,
B) 5 à 70 % en poids, par rapport à l'extrait sec de la dispersion de copolymère, d'un auxiliaire ignifugeant,
C) 0,1 à 15 % en poids, par rapport à l'extrait sec de la dispersion de copolymère, d'un agent moussant,
D) 0,5 à 60 % en poids, par rapport à l'extrait sec de la dispersion de copolymère, d'un plastifiant,
E) 0 à 10 % en poids, par rapport à l'extrait sec de la dispersion de copolymère, d'un épaississant,
F) 0 à 10 % en poids, par rapport à l'extrait sec de la dispersion de copolymère, d'un pigment coloré.

2. Masse de revêtement selon la revendication 1, **caractérisée en ce que** l'auxiliaire ignifugeant B) est le trioxyde d'antimoine, le pentoxyde d'antimoine, l'oxyhydrate d'aluminium, le borate de zinc, l'ortho- ou le polyphosphate d'ammonium, un composé organophosphoré, un auxiliaire ignifugeant intumescent ou le phosphore rouge.

3. Masse de revêtement selon la revendication 1, **caractérisée en ce que** l'agent moussant C) est un sel choisi parmi les oléfinesulfonates, les oxydes d'amine, les sels d'alkylsulfates supérieurs, les alkyléthersulfates, les alkylbenzènesulfonates, les dialkylsulfosuccinates, les alkylphényléthers polyéthoxylés, les esters acyliques polyéthoxylés, les sels d'acides gras, les alcanolamides d'acides gras, les bétaines, les produits d'éthoxylation du nonylphénol, les alcools gras éthoxylés, les sulfosuccinates, les acides alkylcarboxyliques éthoxylés, les acylglutamates, les iséthionates, les produits de condensation protéine-acide gras, les méthyltaurides ou les sarcosides.

4. Masse de revêtement selon la revendication 1, **caractérisée en ce que** le constituant D) est une huile de paraffine en des quantités allant jusqu'à 60 % en poids et/ou une silicone en des quantités allant jusqu'à 3 % en poids, dans chaque cas par rapport à l'extrait sec de la dispersion de copolymère.

5. Masse de revêtement selon la revendication 1, **caractérisée en ce que** l'épaississant est un épaississant organique.

6. Masse de revêtement selon la revendication 5, **caractérisée en ce que** l'épaississant organique est un poly(alcool vinylique), un dérivé de cellulose soluble dans l'eau, un polyuréthanne, une polyvinylpyrrolidone ou un sel d'ammonium d'un poly(acide acrylique).

7. Utilisation de la masse de revêtement selon la revendication 1 pour revêtir des structures textiles bidimensionnelles.

8. Structure textile bidimensionnelle qui contient au moins un revêtement, sur une face, constitué de la masse de revêtement selon la revendication 1, et une hydrophobisation.

9. Utilisation de la structure textile bidimensionnelle selon la revendication 8 en tant que bande de toiture, en particulier bande de sous-toiture, bandes d'étanchéité, bâches de protection, ou en tant que géotextiles.
